# EUROPÄISCHE PATENTSCHRIFT

(11) **EP 1 806 259 B1**
(45) Veröffentlichungstag und Bekanntmachung des Hinweises auf die Patenterteilung: **18.03.2009**
(21) Anmeldenummer: 06000321.7
(22) Anmeldetag: 09.01.2006
(51) Int. Cl.: B60P 1/44

(54) **Plattform für eine Hubladebühne für Lastkraftfahrzeuge**
Vehicle tail lift platform
Hayon élévateur pour véhicule de transport

(43) Veröffentlichungstag der Anmeldung: 11.07.2007
(73) Patentinhaber: Bär, Gerd, 74078 Heilbronn (DE)
(72) Erfinder: Bär, Gerd, 74078 Heilbronn (DE)
(74) Vertreter: Friz, Oliver

(56) Entgegenhaltungen:
- EP-A- 0 081 115
- EP-A- 1 018 452
- WO-A-01/54942
- JP-A- 9 188 183

## Beschreibung

Die Erfindung betrifft eine Plattform für eine Hubladebühne für Lastkraftfahrzeuge, umfassend eine plattenförmige, im Wesentlichen ebene Grundstruktur mit mehreren nebeneinander angeordneten Hohlfachprofilen oder Hohlfachprofilleisten aus Aluminium, mit einem quer zu deren Längserstreckung erstreckten Anschlussprofil zum Lkw hin sowie mit einem hierzu parallelen jedoch auf der gegenüberliegenden vom Lkw abgewandten Seite der Holfachprofilleisten vorgesehenen Spitzenprofil, weiter zwei Anschlussköpfe für die plattenförmige Grundstruktur zum Anlenken von Hub- und Tragarmen der Neig- und Schließeinrichtungen und ein Versteifungsmittel für die Plattform.

Eine Plattform der vorstehend genannten Art ist beispielsweise aus EP 1 018 452 B1 bekannt. Es gibt Plattformen in kompletter Ganzaluminium-Ausführung, bei denen also auch Anschlussköpfe zur Aufnahme der hubwerkseitigen Mechanik aus Aluminium gefertigt sind. Dies ist jedoch sehr aufwendig, weshalb überwiegend Plattformen in sogenannter Mischbauweise, also mit Aluminiumbauteilen und Stahlbauteilen, vorbekannt sind. Bei bekannten Plattformen bildet das vorgenannte Anschlussprofil, das in der Regel als sogenanntes Radiusanschlussprofil an der Lkw-Seite ausgebildet ist, den Übergang zum Laderaum des Lkws. Das auf der gegenüberliegenden Seite vorgesehene Spitzenprofil, welches mit einer spitzwinklig endenden Kante ausläuft, soll eine gute Auffahrsituation mit dem Boden ausbilden.

Nach EP 1 018 452 B1 (dort Figur 1) waren Plattformen bekannt, bei denen das Anschlussprofil und ein unterhalb der Plattformebene vorgesehenes Versteifungsmittel einstückig als ausladendes Strangpressprofil aus Aluminium gebildet sind. Naturgemäß sind Strangpressprofile aus Aluminium mit großen Ausdehnungen von den Werkzeug- und Presskosten her sehr teuer, wobei der Preis etwa quadratisch mit der Abmessung steigt. Eine derartige Ausführung eignet sich allenfalls für leichte Hubladebühnen, bei denen es auf das Gewicht und auf das optische Erscheinungsbild ankommt. Bei größeren Plattformen, die auch für stärkere Belastungen geeignet sind, eignet sich diese Ausführung weniger. Außerdem sind Strangpressprofile in der Längsrichtung beidseits offen und können infolgedessen nur mit einer geringeren Verwindungsstabilität ausgebildet werden. Entsprechend wäre eine noch ausladendere Konstruktion und größere Wanddicken erforderlich. Wohl aus diesem Grund lehrt EP 1 018 452 B1, von Versteifungsmitteln aus Aluminium Abstand zu nehmen und stattdessen ein einstückig kombiniertes Anschlussprofil mit unterhalb der Plattformebene prismatisch abgewinkeltem Versteifungsmittel aus Stahl zu wählen, welches mittels Bolzen-Mutterverbindung mit der ebenenbildenden Grundstruktur aus Aluminiumbauteilen verbunden ist. Zum einen ist dann aber auf der Außenseite der Plattform eine Vielzahl von Bolzen-Mutterverbindungen auf Sichthöhe zu sehen, was optisch wenig ansprechend ist. Auch die Reinigung ist sowohl bei Handreinigung als auch bei Maschinenreinigung problematisch. Zum anderen erweist sich bei extremer Belastung über längere Zeit eine Bolzen-Mutterverbindung als störungsanfällig und nicht dauerstabil. Außerdem bleibt der Gewichtsnachteil der Verwendung von Eisenwerkstoffen.

Der vorliegenden Erfindung liegt die Aufgabe zugrunde, eine gewichtsoptimierte Plattform der eingangs genannten Art zu schaffen, die sich einfach und wirtschaftlich herstellen lässt und die dennoch den in der Praxis auftretenden Anforderungen an die Dauerbelastbarkeit, Verwindungsstabilität und Elastizität gerecht wird.

Diese Aufgabe wird ausgehend von einer Plattform der eingangs genannten Art erfindungsgemäß dadurch gelöst, dass das Versteifungsmittel von einem von außen auf die Grundstruktur aufgesetzten, in Umfangsrichtung durchgehend geschlossenen Verstärkungskasten aus Aluminium gebildet ist, der mit der Grundstruktur verschweißt oder verlötet ist, und dass die den Verstärkungskasten tragende Grundstruktur mit den Anschlussköpfen montageverbunden ist.

Es wird erfindungsgemäß auf ausladende Versteifungsmittel (die zugleich das Anschlussprofil bilden) verzichtet, und es wird stattdessen ein von der Grundstruktur - bestehend aus den ebenenbildenden Hohlfachprofilleisten, dem Anschlussprofil und dem Spitzenprofil - losgelöstes Versteifungsmittel in Form des Verstärkungskastens aus Aluminium verwendet, der entlang eines offenen Umfangsrands mit der Grundstruktur verschweißt oder verlötet wird. Dieser Verstärkungskasten ist also allenfalls auf seiner Anlageseite zur Grundstruktur hin offen und ansonsten in der Umfangsrichtung allseitig durchgehend geschlossen. Auf diese Weise bekommt der Verstärkungskasten eine hohe Verwindungssteifigkeit und vermag im angeschweißten oder angelöteten Zustand an die plattenförmige Aluminiumgrundstruktur der Plattform als Ganzes eine hohe Verwindungssteifigkeit und aufgrund der Schweiß- oder Lötverbindung dauerhafte Belastbarkeit zu verleihen.

Die (bei geschlossener Ladebordwand) senkrechten Hohlfachprofilleisten aus Aluminium sind in ihrer Dicke entsprechend der Dimensionierung und entsprechend der Belastbarkeit der jeweiligen Plattform angepasst. Sie beginnen bei 30 mm für eine Tragkraft von ca. 750 kg und enden bei etwa 50 mm für eine Tragkraft von 3000 kg, wobei ihre Wandstärke von etwa 2 bis 4 mm variiert. Hierbei handelt es sich aber lediglich um vorteilhafte Ausführungsformen. Des Weiteren erweist es sich als vorteilhaft, dass bei Verwendung von Anschlussprofilen und/oder Spitzenprofilen aus Aluminium eine Schweiß- oder Lötverbindung zwischen den Hohlfachprofilleisten und dem Anschlussprofil bzw. dem Spitzenprofil zur dauerhaften Fügung gewählt werden kann. Entsprechende Schweißnähte können vorteilhafter Weise von einem Schweißroboter ausgeführt werden.

Nach dem Heften der Hohlfachprofilleisten und dem Heften mit dem Anschlussprofil und dem Spitzenprofil erfolgt das Aufsetzen und Anheften des Verstärkungskastens an die Grundstruktur. Danach werden sämtliche Teile mittels Schweiß- oder Lötverbindung dauerhaft stabil verbunden. Insgesamt lässt sich eine optisch ansprechende ebene Rück-oder Außenansicht der erfindungsgemäßen Plattform erreichen, bei der keine störenden Flansche oder Schraubenköpfe sichtbar sind. Die gesamte Plattform ist korrosionsfrei, wobei lediglich die Anschlussköpfe wie die übrigen Hubwerksteile aus Stahl sind. Die Plattform ist stabilitäts- und elastizitätsmäßig bekannten Plattformen wenigstens gleichwertig und weist ein diesen gegenüber geringeres Gewicht auf. Es erweist sich auch als vorteilhaft, dass ausgehend von dem jeweiligen Anschlusskopf oder von dem Anschlussprofil keine weiteren in Richtung auf das Spitzenprofil erstreckten Versteifungsmittel vorgesehen werden müssen. Die erforderliche Verwindungssteifigkeit lässt sich mit dem umlaufend geschlossenen Versteifungskasten allein erhalten.

Nach einer bevorzugten Ausführungsform der Erfindung ist der Verstärkungskasten aus einem einzigen einstückigen Flachmaterial, also aus einem einzigen Aluminiumblech, gebildet. Er kann entweder durch Tiefziehen hergestellt werden, was jedoch die Bereitstellung einer entsprechenden Tiefziehform erfordert, oder er kann in vorteilhafter Weise durch Durchtrennen und Kanten des Flachmaterials hergestellt werden. Im letzteren Fall sind Trennschnitte durch Schneiden, beispielsweise auf einer Stanz- oder Nippelmaschine, oder auch mittels Lasertechnik, erforderlich. In vorteilhafter Weise braucht solchenfalls auf jeder Seite (links, rechts) nur eine Schweißnaht zur Bildung des umlaufend geschlossenen Verstärkungskastens angebracht zu werden. Es erweist sich als vorteilhaft, wenn die Wandstärke des Flachmaterials und des hieraus gebildeten Versteifungskastens zwischen 3 und 6 mm, vorzugsweise bei ca. 4 mm liegt. Auf diese Weise lässt sich der Versteifungskasten gut und wenig verzugsanfällig mit den ähnlich starken Aluminium-Hohlfachprofilleisten verschweißen. Der gesamte Aluminiumschweißprozess zur Bildung des Versteifungskastens als separates Bauteil und zum Fügen des Versteifungskastens an die Grundstruktur kann auf einer automatischen Schweißvorrichtung auf wirtschaftliche Weise ausgeführt werden.

Es erweist sich des Weiteren als vorteilhaft, wenn der Verstärkungskasten in Richtung senkrecht auf die plattenförmige Grundstruktur betrachtet vier schräg nach außen geneigte Wandungen aufweist, von denen zwei eine im Gebrauch horizontal verlaufende Firstlinie bilden. Diese Geometrie des Verstärkungskastens ist einfach und materialsparend herstellbar und stützt die Plattform als Ganzes auf großer Breite. Außerdem ist diese Ausbildung optisch ansprechend.

Die zwei in Fahrtrichtung links bzw. rechts liegenden Wandungen des Verstärkungskastens schließen vorteilhafterweise einen Winkel von 40° bis 60° mit der Ebene der plattenförmigen Grundstruktur ein.

Zur weiteren Erhöhung der Verwindungsstabilität und vor allem der Beulsteifheit erweist es sich als vorteilhaft, wenn der Verstärkungskasten in seinem Inneren Stabilisierungselemente aufweist, die gegen die Innenseite einer oder mehrerer Wandungen des Verstärkungskastens befestigt sind. Bei diesen Stabilisierungselementen kann es sich in vorteilhafter Weise um Rippen bildende Metallteile handeln, die innen gegen die Wandungen des Verstärkungskastens geschweißt oder gelötet sind. Diese erweisen sich im besonderen Maße als wirksam, wenn sie mit der in Vertikalstellung der Plattform unteren Wandung des Verstärkungskastens verbunden sind, d. h. mit den Wandungen, welche den Anschlussköpfen zugewandt sind und über welche Druckkräfte übertragen werden können. Die Stabilisierungselemente können in vorteilhafter Weise doppelt oder mehrfach gekantet sein. Dies eröffnet die Möglichkeit, dass für die Versteifungselemente Aluminiumblech gleicher Wandstärke wie dasjenige des Verstärkungskastens verwendet werden kann, was im Hinblick auf eine problemlose Verschweißbarkeit der Stabilisierungselemente mit dem Verstärkungskasten von Vorteil ist. Dennoch kann die versteifende Wirkung durch mehrfaches Kanten erhöht werden.

Nach einem weiteren Erfindungsgedanken erstreckt sich der Verstärkungskasten nicht über die gesamte Breite der Plattform. Er erstreckt sich lediglich über die jeweiligen Aussenkanten der beiden Anschlussköpfe. Dies eröffnet nämlich die Möglichkeit der problemlosen und geschützten Anbringung einer Nachtparktafel in einem unteren Bereich der vertikal stehenden Plattform beidseits des Verstärkungskastens.

Zur Verbindung der plattenförmigen und im Wesentlichen ebenen Grundstruktur mit dem jeweiligen Anschlusskopf ist vorteilhafterweise im Druckbereich, also im Bereich unterhalb der Plattformebene, eine Schraubverbindung gewählt. Diese Schraubverbindung ist in vorteilhafter Weise zwischen einer Wandung des Verstärkungskastens und einer zu dieser Wandung parallelen Platte des Anschlusskopfs vorgesehen. Zusätzlich ist die Grundstruktur über das Anschlussprofil mit einem jeweiligen Anschlusskopf montageverbunden. Diese Montageverbindung kann ebenfalls eine Schraubverbindung sein. Es ist aber auch denkbar, dass das Anschlussprofil einen Hintergriff in Zugrichtung mit einer Schulter oder einer Anschlussplatte des Anschlusskopfs ausbildet, so dass Zugkräfte von der Grundstruktur über das Anschlussprofil in den Anschlusskopf eingeleitet werden.

In vorteilhafter Weise liegt die Grundstruktur über den Verstärkungskasten gegen den jeweiligen Anschlusskopf an, so dass Druckkräfte von der Grundstruktur über den Verstärkungskasten in die Anschlussköpfe eingeleitet werden. Dabei erweist es sich als vorteilhaft, wenn zwischen einer Wandung des Verstärkungskastens und einer hierzu parallelen Anschlussplatte des Anschlusskopfs eine Druckplatte vorgesehen ist, die zugleich einen Abstandshalter zwischen Verstärkungskasten und Anschlusskopf bildet. Durch diesen Abstand kann die umlaufende Schweißnaht zwischen dem Verstärkungskasten und der Hohlkammerwand des Anschlussprofils als Kehlnaht ausgebildet werden, d. h. die betreffende Wandung des Verstärkungskastens ist geringfügig gegenüber dem Anschlussprofil zurückgesetzt, wobei diese Zurücksetzung eben durch die Druckplatte als Abstandshalter kompensiert wird, so dass Druckkräfte dennoch auf den Anschlusskopf übertragen werden können.

Weitere Merkmale, Vorteile und Einzelheiten der Erfindung ergeben sich aus den beigefügten Patentansprüchen und aus der zeichnerischen Darstellung und nachfolgenden Beschreibung einer bevorzugten Ausführungsform der Erfindung.

In der Zeichnung zeigt:
Figur 1 eine Außenansicht einer erfindungsgemäßen Plattform einer Hubladebühne in vertikaler Schließstellung;
Figur 2 eine Seitenansicht der Plattform in Richtung des Pfeils II;
Figur 3 eine teilweise Schnittansicht mit Schnittebene A-A in Figur 1 (um 90° gedreht); und
Figur 4 eine Figur 3 entsprechende Ansicht einer weiteren Ausführungsform der Erfindung, wobei der Verstärkungskasten zusätzliche Stabilisierungselemente aufweist;
Figur 5 eine perspektivische Ansicht des in Figur 4 dargestellten Stabilisierungselements;
Figur 6 eine teilweise Schnittansicht mit Schnittebene C-C in Figur 4;
Figur 7 eine teilweise Schnittansicht der Plattform mit Schnittebene B-B in Figur 1.

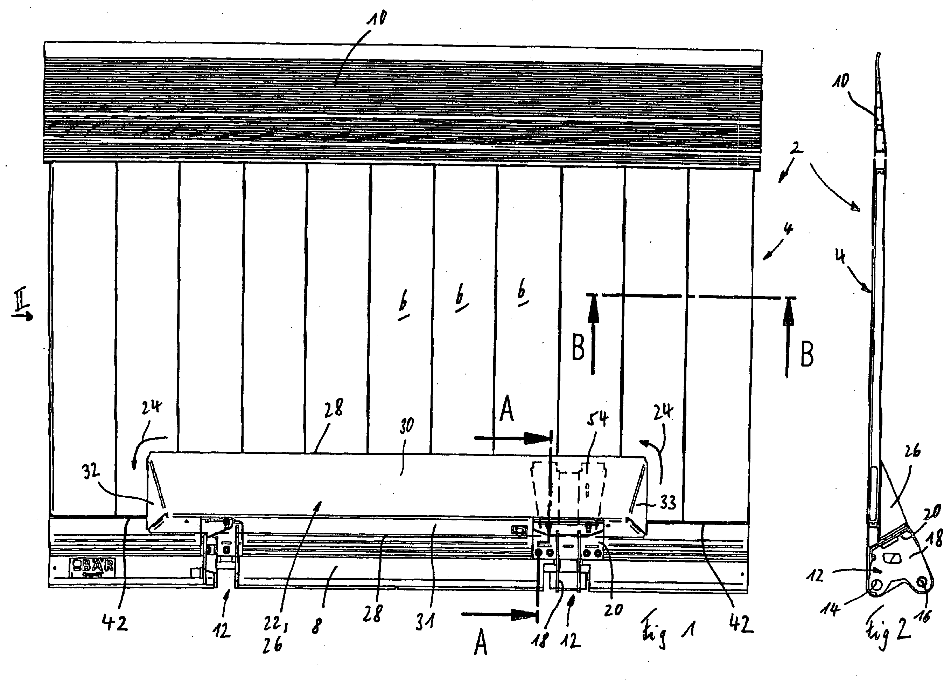

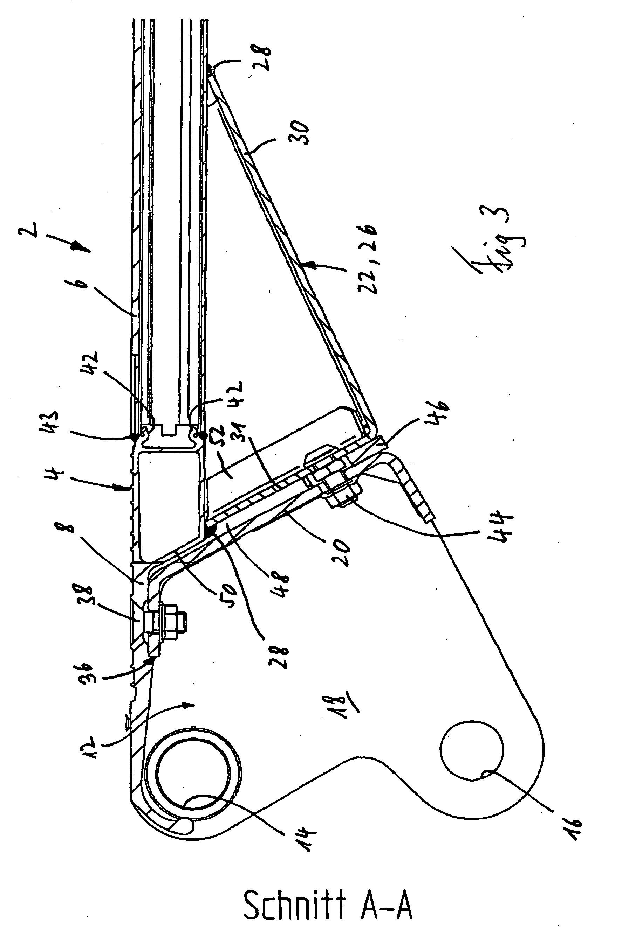

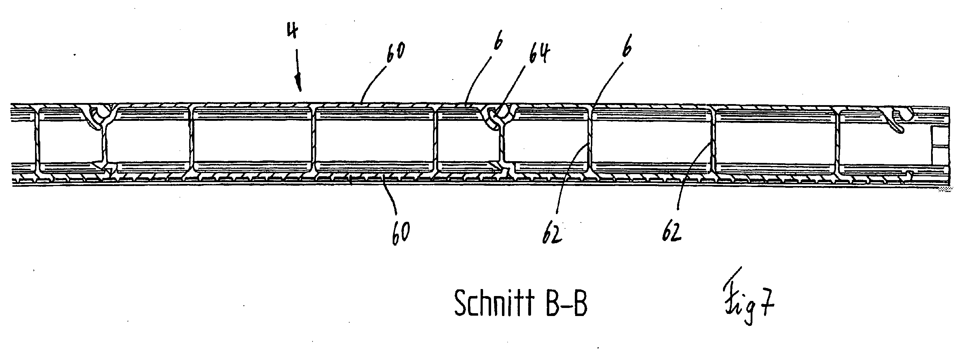

Die Figuren zeigen eine insgesamt mit dem Bezugszeichen 2 bezeichnete Plattform für eine nicht dargestellte Hubladebühne eines Lastkraftfahrzeugs. Die Plattform 2 umfasst eine plattenförmige im Wesentlichen ebene Grundstruktur 4, die gebildet ist aus mehreren in der Darstellung der Figur 1 vertikal und nebeneinander angeordneten Hohlfachprofilleisten 6 und mit einem in der Figur 1 an den Hohlfachprofilleisten 6 unten vorgesehenen Anschlussprofil 8 und einem oben vorgesehenen Spitzenprofil 10. (Eine seitliche in Längsrichtung verlaufende Randleiste ist nicht dargestellt). Diese aus Hohlfachprofilleisten 6, Anschlussprofil 8 und Spitzenprofil 10 im Wesentlichen gebildete Grundstruktur 4 ist montageverbunden mit zwei Anschlussköpfen 12, deren Struktur aus Figuren 1 und 3, aber auch 2, ersichtlich ist. Die jeweiligen Anschlussköpfe 12 umfassen Öffnungen 14, 16 zum Anlenken von Hub- und Tragarmen von nicht dargestellten Neig- und Schließeinrichtungen der Hubladebühne. Die Hohlfachprofilleisten sind im Schnitt in Figur 7 dargestellt.

Die jeweiligen Anschlussköpfe 12 umfassen je zwei vertikal und parallel zueinander orientierte Montageplatten 18, die eine hierzu abgewinkelt angeordnete Anschlussplatte 20 tragen. Die Bauteile des jeweiligen Anschlusskopfs 12 sind vorteilhafterweise aus Stahl.

Des Weiteren erkennt man ein Versteifungsmittel 22 in Form eines in einer Umfangsrichtung 24 voll umfänglich und durchgehend geschlossenen Verstärkungskastens 26. Der Verstärkungskasten 26 ist vorteilhafterweise aus einem einzigen Aluminiumblech durch Tiefziehen oder vorzugsweise durch Einschneiden bzw. Ausschneiden und Abkanten als separates Bauteil gebildet und gegen die aus Figur 2 ersichtliche Sichtseite der Grundstruktur 4 angeschweißt, und zwar entlang einer in Umfangsrichtung 24 umlaufend geschlossenen Schweißnaht 28. Man erkennt aus der Ansicht nach Figur 1, dass der Verstärkungskasten 26 vier schräg nach außen geneigte Wandungen 30 bis 33 aufweist, wobei die beiden langen horizontal verlaufenden Wandungen 30, 31 eine gemeinsame Firstlinie 34 bilden.

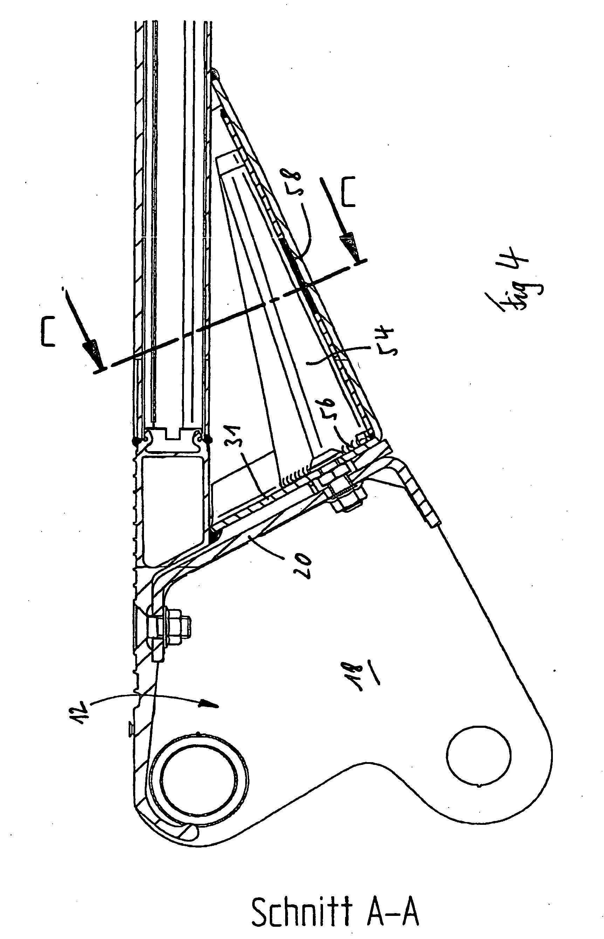

Aus Figuren 3 und 4 ist die Montageverbindung der Grundstruktur 4 mit angeschweißtem Verstärkungskasten 26 an dem Anschlusskopf 12 ersichtlich. Die Grundstruktur 4 liegt mit dem Anschlussprofil 8 auf der Anschlussplatte 20 des Anschlusskopfs 12 auf und hintergreift eine Stirnseite oder Schulter 36 der Anschlussplatte 20 in der Orientierung der Figur 3 horizontal formschlüssig. Zudem ist das Anschlussprofil 8 gegenüber jeder Anschlussplatte 20 mit vier Senkschrauben 38 (beispielhaft) verschraubt. Durch Gewicht auf der Plattform erzeugte Zugkräfte werden hauptsächlich über die Schulter 36 auf die Anschlussplatte 20 und damit auf den Anschlusskopf 12 übertragen. Man erkennt ferner aus Figur 2 das (kreis-)bogenförmig auslaufende Lkw-seitige Ende 40 des Anschlussprofils 8 (auch als Radiusprofil bezeichnet).

Die Verbindung zwischen Anschlussprofil 8 und der Vielzahl von Hohlfachprofilleisten 6 ist ebenfalls aus Figuren 1 und 3 ersichtlich. Das Anschlussprofil 8 erstreckt sich mit leicht federnden Enden 42 einige Millimeter in das Innere der Hohlfachprofilleisten 6. Im Übergangsbereich wird dann eine auch aus Figur 1 ersichtliche (dort horizontal verlaufende) Schweißnaht 42 von außen bis zu der Wandung 32, 33 des Verstärkungskastens 26 angebracht. Auf der gegenüberliegenden Seite (in Figur 3 oben) wird eine über die gesamte Breite verlaufende Schweißnaht 43 zwischen Hohlfachprofilleisten 6 und Anschlussprofil 8 geschweißt.

Es sei noch erwähnt, dass das Anschlussprofil 8, das Spitzenprofil 10 und die Hohlfachprofilleisten 6 zunächst miteinander verheftet werden. In einem nachfolgenden Schritt wird der Verstärkungskasten 26 ebenfalls aufgeheftet. In dieser gehefteten Form wird die Plattform 2 dann in vorteilhafter Weise auf einen Schweißroboter gegeben und dort in einem Arbeitsgang fertiggeschweißt.

Man erkennt des Weiteren aus Figur 3, dass zwischen der Wandung 31 des Verstärkungskastens 26 und der Anschlussplatte 20 eine Montageverbindung in Form einer Schraubenverbindung 44 vorgesehen ist, wobei zwischen Wandung 31 und Anschlussplatte 20 eine Druckplatte 46 zwischengeordnet ist, die nicht nur zur Einleitung von Druckkräften auf die Anschlussplatte 20 dient, sondern auch eine Abstandshalterfunktion hat. Man erkennt zwischen Wandung 31 und Anschlussplatte 20 einen Zwischenraum 48, der zum Teil auf eine Zurücksetzung der Wandung 31 gegenüber einer Stirnwand 50 des Anschlussprofils 8 zurückgeht. In diesem Zwischenraum kann in vorteilhafter Weise die Schweißnaht 28 als Kehlnaht untergebracht werden.

Im Inneren des Verstärkungskastens 26 erkennt man einen nach innen abgekanteten Abschnitt 52 der Wandung 31. Durch diese Maßnahme kann ebenfalls eine füllende Kehlnaht zwischen den Wandungen 31, 33 und 31, 32 vorgesehen werden.

Die Ausführungsform nach Figur 4 unterscheidet sich von derjenigen nach Figur 3 dadurch, dass im Inneren des Verstärkungskastens 26 zusätzliche Stabilisierungselemente 54 zur weiteren Aussteifung des Verstärkungskastens 26 vorgesehen sind. Es handelt sich dabei um rippenbildende Metallteile, die vorzugsweise gegen die Innenseite des Verstärkungskastens 26 geschweißt sind. In vorteilhafter Weise sind das oder die Versteifungselemente 54 gegen die dem Anschlusskopf 12 bzw. der Anschlussplatte 20 zugewandte Wandung 31 geschweißt (s. Bezugszeichen 56). Es können aber auch insbesondere zusätzlich eine oder mehrere Langlochschweißungen 58 zur Erzielung einer hohen Beulsteifigkeit vorgesehen werden.

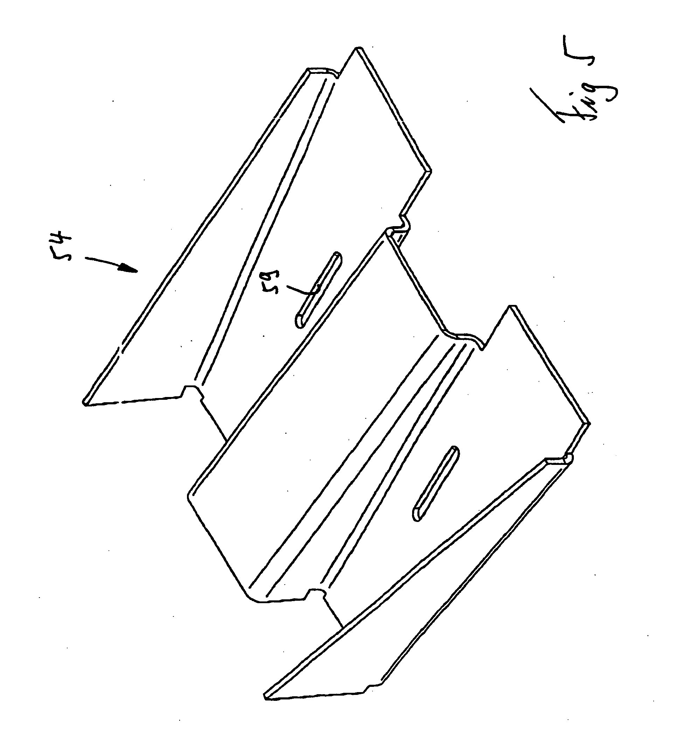

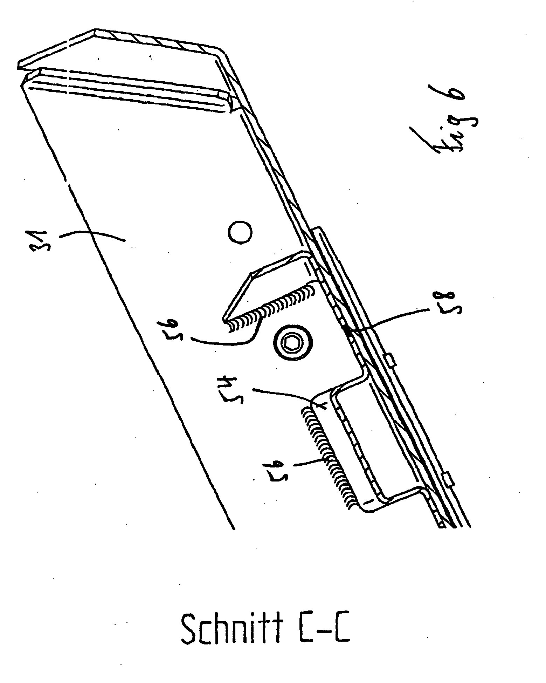

Figur 5 zeigt in perspektivischer Darstellung ein Stabilisierungselement 54 mit mehrfachen Abkantungen und langlochförmigen Öffnungen 59 zur Anbringung der Langlochschweißungen 58. Figur 6 zeigt die Befestigung des Stabilisierungselements 54 in dem Verstärkungskasten 26.

Figur 7 zeigt schließlich im Detail und in Schnittdarstellung miteinander verbundene Hohlfachprofilleisten 6. Sie umfassen und bilden zwei parallele Wände 60, welche die Flachseiten der Grundstruktur 4 bilden. Diese Wände sind einstückig durch in Längsrichtung und senkrecht hierzu verlaufende Trennwände 62 voneinander beabstandet; hierdurch wird eine verrippte verwindungsstabile Tragkonstruktion gebildet. Mehrere Hohlfachprofilleisten 6 sind durch in Längsrichtung erstreckte ineinandergreifende und vorzugsweise miteinander verrastende Haltemittel 64 aneinander formschlüssig gehalten.

## Patentansprüche

1. Plattform (2) für eine Hubladebühne für Lastkraftfahrzeuge, umfassend eine plattenförmige, im wesentlichen ebene Grundstruktur (4) mit mehrere nebeneinander angeordneten Hohlfachprofilen oder Hohlfachprofilleisten (6) aus Aluminium, mit einem quer zu deren Längserstreckung erstreckten Anschlussprofil (8) zum LKW hin sowie mit einem hierzu parallelen jedoch auf der gegenüberliegenden vom LKW abgewandten Seite der Hohlfachprofile oder Hohlfachprofilleisten (6) vorgesehenen Spitzenprofil (10), weiter umfassend zwei Anschlussköpfe (12) für die plattenförmige Grundstruktur (4) zum Anlenken von Hub- und Tragarmen der Neig - und Schließeinrichtungen und ein Versteifungsmittel (22) für die Plattform, **dadurch gekennzeichnet, dass** das Versteifungsmittel (22) von einem von außen auf die Grundstruktur (4) aufgesetzten, in Umfangsrichtung (24) durchgehend geschlossenen Verstärkungskasten (26) aus Aluminium gebildet ist, der mit der Grundstruktur (4) verschweißt oder verlötet ist, und dass die den Verstärkungskasten (26) tragende Grundstruktur (4) mit den Anschlussköpfen (12) montageverbunden ist.

2. Plattform nach Anspruch 1, **dadurch gekennzeichnet, dass** der Verstärkungskasten (26) aus einem einzigen einstückigen Flachmaterial gebildet ist.

3. Plattform nach Anspruch 1 oder 2, **dadurch gekennzeichnet, dass** der Verstärkungskasten (26) in Richtung senkrecht auf die plattenförmige Grundstruktur (4) betrachtet vier schräg nach außen geneigte Wandungen (30, 31, 32, 33) aufweist, von denen zwei (30, 31) eine Firstlinie (34) bilden.

4. Plattform nach Anspruch 3, **dadurch gekennzeichnet, dass** die zwei in Fahrtrichtung links bzw. rechts liegenden Wandungen (32, 33) des Verstärkungskastens (26) einen Winkel von 40° - 60° mit der Ebene der plattenförmigen Grundstruktur (4) einschließen.

5. Plattform nach einem oder mehreren der vorstehenden Ansprüche, **dadurch gekennzeichnet, dass** der Verstärkungskasten (26) in seinem Inneren Stabilisierungselemente (54) aufweist, die gegen die Innenseite einer oder mehrerer Wandungen (30, 31, 32, 33) des Verstärkungskastens (26) befestigt sind.

6. Plattform nach Anspruch 5, **dadurch gekennzeichnet, dass** die Stabilisierungselemente (54) rippenbildende Metallteile sind, die innen gegen die Wandungen (30, 31, 32, 33) des Verstärkungskastens (26) geschweißt oder gelötet sind.

7. Plattform nach Anspruch 6 oder 7, **dadurch gekennzeichnet, dass** die Stabilisierungselemente (54) mit der in Vertikalstellung der Plattform unteren Wandung (32) des Verstärkungskastens (26) verbunden sind.

8. Plattform nach einem oder mehreren der vorstehenden Ansprüche, **dadurch gekennzeichnet, dass** der Verstärkungskasten (26) nicht über die gesamte Breite der Plattform erstreckt ist.

9. Plattform nach Anspruch 8, **dadurch gekennzeichnet, dass** der Verstärkungskasten (26) von den seitlichen Längsrändern der Grundstruktur (4) beabstandet ist.

10. Plattform nach einem oder mehreren der vorstehenden Ansprüche, **dadurch gekennzeichnet, dass** die plattenförmige und im wesentlichen ebene Grundstruktur (4) mit den Anschlussköpfen (12) verschraubt ist.

11. Plattform nach einem oder mehreren der vorstehenden Ansprüche, **dadurch gekennzeichnet, dass** die Grundstruktur (4) mit dem Anschlussprofil (8) auf einer Schulter (36) oder Anschlussplatte (20) des betreffenden Anschlusskopfs (12) aufliegt und das Anschlussprofil (8) mit der Schulter (36) oder Anschlussplatte (20) des Anschlusskopfs (12) mechanisch verbunden ist, so dass Zugkräfte von der Grundstruktur (4) über das Anschlussprofil (8) in den Anschlusskopf (12) eingeleitet werden.

12. Plattform nach einem oder mehreren der vorstehenden Ansprüche, **dadurch gekennzeichnet, dass** die Grundstruktur (4) über den Verstärkungskasten (26) gegen den Anschlusskopf (12) anliegt, so dass Druckkräfte von der Grundstruktur (4) über den Verstärkungskasten (26) in den Anschlusskopf (12) eingeleitet werden.

13. Plattform nach Anspruch 12, **dadurch gekennzeichnet, dass** zwischen einer Wandung (32) des Verstärkungskastens (26) und einer hierzu parallelen Anschlussplatte (20) des Anschlusskopfs (12) eine Druckplatte (46) vorgesehen ist, die zugleich einen Abstandhalter zwischen Verstärkungskasten (26) und Anschlusskopf (12) bildet.

## Claims

1. A platform (2) for a tail-lift for trucks, including a platelike, essentially plane base structure (4) having a plurality of aluminum hollow-compartment profiles or hollow-compartment profile rails (6) disposed side by side, having an attachment profile (8) extending toward the truck transversely to the length of the hollow-compartment profiles or hollow-compartment profile rails (6), and having a pointed profile (10), parallel to the attachment profile but provided on the diametrically opposed side, remote from the truck, of the hollow-compartment profiles or hollow-compartment profile rails (6), further including two attachment heads (12) for the platelike base structure (4) for pivotably connecting lifting and support arms of the tilting and closing devices and further including a stiffening means (22) for the platform, **characterized in that** the stiffening means (22) is formed by an aluminum reinforcement box (26) which is placed from outside onto the base structure (4) and is continuously closed in the circumferential direction (24), and which is welded or soldered to the base structure (4); and that the base structure (4) supporting the reinforcement box (26) is joined by assembly to the attachment heads (12).

2. The platform as defined by claim 1, **characterized in that** the reinforcement box (26) is formed of a single flat material in one piece.

3. The platform as defined by claim 1 or 2, **characterized in that** the reinforcement box (26), viewed in the direction perpendicular to the platelike base structure (4), has four walls (30, 31, 32, 33) inclined obliquely outward, two of which (30, 31) form a ridge line (34).

4. The platform as defined by claim 3, **characterized in that** the two walls (32, 33) of the reinforcement box (26) that are located to the left and right with respect to the direction form an angle of 40° to 60° with the plane of the platelike base structure (4).

5. The platform as defined by one or more of the foregoing claims, **characterized in that** the reinforcement box (26) has stabilizing elements (54) in its interior, which are secured against the inside of one or more walls (30, 31, 32, 33) of the reinforcement box (26).

6. The platform as defined by claim 5, **characterized in that** the stabilizing elements (54) are rib-forming metal parts, which are welded or soldered on the inside against the walls (30, 31, 32, 33) of the reinforcement box (26).

7. The platform as defined by claim 6 or 7, **characterized in that** the stabilizing elements (54) are joined to the lower wall (32) of the reinforcement box (26), with the platform being in the vertical direction.

8. The platform as defined by one or more of the foregoing claims, **characterized in that** the reinforcement box (26) does not extend past the total width of the platform.

9. The platform as defined by claim 8, **characterized in that** the reinforcement box (26) is spaced apart from the lateral longitudinal edges of the base structure (4).

10. The platform as defined by one or more of the foregoing claims, **characterized in that** the platelike, essentially plane base structure (4) is screwed with the attachment heads (12).

11. The platform as defined by one or more of the foregoing claims, **characterized in that** the base structure (4) rests with the attachment profile (8) on a shoulder (36) or attachment plate (20) of the applicable attachment head (12), and the attachment profile (8) is joined mechanically to the shoulder (36) or attachment plate (20) of the attachment head (12), so that tractional forces are introduced from the base structure (4) into the attachment head (12) via the attachment profile (8).

12. The platform as defined by one or more of the foregoing claims, **characterized in that** the base structure (4) rests against the attachment head (12) via the reinforcement box (26), so that compressive forces are introduced from the base structure (4) into the attachment head (12) via the reinforcement box (26).

13. The platform as defined by claim 12, **characterized in that** between a wall (32) of the reinforcement box (26) and an attachment plate (20), parallel to it, of the attachment head (12), a pressure plate (46) is provided, which simultaneously forms a spacer between the reinforcement box (26) and the attachment head (12).

## Revendications

1. Plate-forme (2) pour hayon élévateur de camions, comprenant une structure de base (4) en forme de plaque sensiblement plane avec plusieurs profilés creux ou barres profilées creuses (6) en caisson agencés l'un(e) à côté de l'autre, en aluminium, avec un profilé de raccordement (8) s'étendant transversalement à l'extension longitudinale vers le camion ainsi qu'avec un profilé en pointe (10) parallèle au premier, mais prévu sur le côté opposé, tourné vers le camion, des profilés creux ou barres profilés creuses (6) en caisson, comprenant en outre deux têtes de raccordement (12) pour la structure de base (4) en forme de plaque pour articuler des bras de levage et de support des dispositifs d'inclinaison et de fermeture et un moyen de renfort (22) pour la plate-forme, **caractérisée en ce que** le moyen de renfort (22) est formé d'une caisse de renfort (26) posée de l'extérieur sur la structure de base (4) et fermée en permanence dans la direction périphérique (24), en aluminium, caisse qui est soudée ou brasée à la structure de base (4), et **en ce que** la structure de base (4) portant la caisse de renfort (26) est liée aux têtes de raccordement par montage.

2. Plate-forme selon la revendication 1, **caractérisée en ce que** la caisse de renfort (26) est formée d'un matériau plat d'un seul tenant.

3. Plate-forme selon la revendication 1 ou 2, **caractérisée en ce que** la caisse de renfort (26), observée perpendiculairement à la structure de base (4) en forme de plaque, présente quatre parois (30, 31, 32, 33) inclinées en oblique vers l'extérieur, dont deux (30, 31) forment une ligne de faîte (34).

4. Plate-forme selon la revendication 3, **caractérisée en ce que** les deux parois (32, 33) de la caisse de renfort (26) situées à gauche ou à droite dans le sens de la marche inscrivent un angle de 40 ° à 60 ° avec le plan de la structure de base (4) en forme de plaque.

5. Plate-forme selon une ou plusieurs des revendications précédentes, **caractérisée en ce que** la caisse de renfort (26) présente à l'intérieur des éléments de stabilisation (54) qui sont fixés contre la face interne d'une ou plusieurs parois (30, 31, 32, 33) de la caisse de renfort (26).

6. Plate-forme selon la revendication 5, **caractérisée en ce que** les éléments de stabilisation (54) sont des parties métalliques en forme de nervures, qui sont soudées ou brasées à l'intérieur contre les parois (30, 31, 32, 33) de la caisse de renfort (26).

7. Plate-forme selon la revendication 6 ou 7, **caractérisée en ce que** les éléments de stabilisation (54) sont raccordés à la paroi (32), inférieure dans la position verticale de la plate-forme, de la caisse de renfort (26).

8. Plate-forme selon une ou plusieurs des revendications précédentes, **caractérisée en ce que** la caisse de renfort (26) ne s'étend pas sur toute la largeur de la plate-forme.

9. Plate-forme selon la revendication 8, **caractérisée en ce que** la caisse de renfort (26) est espacée des bords longitudinaux latéraux de la structure de base (4).

10. Plate-forme selon une ou plusieurs des revendications précédentes, **caractérisée en ce que** la structure de base (4) en forme de plaque et sensiblement plane est vissée aux têtes de raccordement (12).

11. Plate-forme selon une ou plusieurs des revendications précédentes, **caractérisée en ce que** la structure de base (4) s'applique avec le profilé de raccordement (8) sur un épaulement (38) ou sur une plaque de raccordement (20) de la tête de raccordement concernée (12) et le profilé de raccordement (8) est raccordé mécaniquement à l'épaulement (36) ou à la plaque de raccordement (20) de la tête de raccordement (12) de sorte que des forces de traction soient introduites de la structure de base (4), via le profilé de raccordement (8), dans la tête de raccordement (12).

12. Plate-forme selon une ou plusieurs des revendications précédentes, **caractérisée en ce que** la structure de base (4) s'applique via la caisse de renfort (26) contre la tête de raccordement (12) de sorte que des forces de pression soient introduites de la structure de base (4), via la caisse de renfort (26), dans la tête de raccordement (12).

13. Plate-forme selon la revendication 12, **caractérisée en ce qu'**il est prévu entre une paroi (32) de la caisse de renfort (26) et une plaque de raccordement (20), qui lui est parallèle, de la tête de raccordement (12) une plaque de pression (46), qui forme en même temps un espaceur entre la caisse de renfort (26) et la tête de raccordement (12).
